# EUROPÄISCHE PATENTSCHRIFT

(11) **EP 3 534 764 B1**
(45) Veröffentlichungstag und Bekanntmachung des Hinweises auf die Patenterteilung: **02.09.2020**
(21) Anmeldenummer: 17832727.6
(22) Anmeldetag: 27.10.2017
(51) Int. Cl.: A47J 43/07, H05B 6/64

(54) **GERÄT ZUR ZUBEREITUNG VON MILCHSCHAUM**
DEVICE FOR PREPARING MILK FROTH
APPAREIL DE PRÉPARATION DE MOUSSE DE LAIT

(30) Priorität: 05.11.2016 DE 202016006814 U
(43) Veröffentlichungstag der Anmeldung: 11.09.2019
(73) Patentinhaber: WIK Far East Ltd., North Point, Hong Kong (CN)
(72) Erfinder: NEHRING, Martin, 47269 Duisburg (DE); SU, Bo, Shenzhen (CN)
(74) Vertreter: Haverkamp, Jens
(86) Internationale Anmeldenummer: PCT/DE2017/000357
(87) Internationale Veröffentlichungsnummer: WO 2018/082724

(56) Entgegenhaltungen:
- WO-A1-00/49930
- WO-A1-2012/022081

## Beschreibung

Die gegenständliche Erfindung betrifft ein Gerät zur Zubereitung eines Schaums aus einer Nahrungsmittelflüssigkeit vorzugsweise Milch. Das Gerät ist zur Verwendung im Rahmen der Herstellung von Getränken, wie beispielsweise Cappuccino, Milchkaffee, Cafe-Latte, Latte Macchiato oder heißer Schokolade sowie weiterer Getränke vorgesehen.

Die vorgenannten Getränke basieren auf dem gewünschten Ergebnis, dass eine Schicht aus Milch oberhalb der dem Getränk zugrunde liegenden Flüssigkeit aufschwimmt. Dies ist möglich aufgrund der geringeren Dichte des Milchschaums. Für die Herstellung des Milchschaums ist entweder ein automatischer oder ein händischer Arbeitsschritt notwendig.

Üblicherweise handelt sich bei den zur Milchaufschäumung erhältlichen automatischen Geräten um eigenständige Geräte oder um Geräte die beispielsweise mit einer Kaffeemaschine in Verbindung gesetzt wurden.

Vorliegend problematisch ist, dass nach dem Stand der Technik lediglich geringe Mengen Milchschaum aufgeschäumt werden können. Insoweit wird auf WO2012022081 verwiesen. Entsprechend dieser Druckschrift ist die Milchaufschäumung lediglich innerhalb eines Behältnisses möglich, welches zuvor mit Milch durch den Anwender gefüllt wurde. Eine Milchaufschäumung auf Abruf, ohne den vorherigen Arbeitsschritt, ist mithin nicht möglich. Ebendiese Problematik besteht auch insoweit in Bezug auf WO0049930. Beide, dem Stand der Technik nach bekannten Schutzrechte, weisen die Problematik auf, dass ein vorheriges Einfüllen der jeweiligen Lebensmittelflüssigkeit in das Behältnis notwendig ist. So sind für viele Portionen des gewünschten Milchschaums auch entsprechend viele Arbeitsschritte durch den Benutzer vorzunehmen. Der Benutzer muss ein und denselben Vorgang stetig wiederholen um die entsprechende Menge der Getränke zuzubereiten.

Die Größe des für die Milchaufschäumung verwendeten Gefäßes limitiert gleichzeitig die Menge des zu erhaltenden Milchschaums. Die Größe der entsprechenden Gefäße beträgt häufig nur wenige 100 Milliliter. Speziell für den gastronomischen Bereich genügt dies häufig nicht den Anforderungen.

Ebenfalls nachteilig bei den meisten nach dem Stand der Technik bekannten Milchaufschäumern ist die Tatsache, dass diese in kurzen Abständen stetig gereinigt werden müssen. Während der Milchaufschäumung kann es bei herkömmlicher Herstellung zum Anbrennen der Milch auf dem Behältnisboden kommen. Die Ursache dafür sind sogenannte Hot-Spots, die sich auf dem Gefäßboden bilden. Die Hitze wird punktuell auf den Boden übertragen und sorgt so an einigen Stellen für eine Überhitzung der Milch. Infolgedessen brennt die Milch auf dem Behältnisboden an.

Um gleichbleibend den hygienischen Anspruch auf Sauberkeit zu gewährleisten müssen die nach dem Stand der Technik bekannten Milchaufschäumer nach jeder Anwendung gereinigt werden.

### Zielsetzung der Erfindung

Besondere Eigenschaft des erfindungsgemäßen Milchaufschäumers soll es sein, dass Milchschaum "on-demand" zur Verfügung gestellt wird. Dies ist gerade für den professionellen Anwender von Vorteil. Weitere Zwischenschritte durch den Anwender sollen während der Produktion des Milchschaums nicht notwendig sein.

Eine andere Aufgabe der Erfindung ist es, ein Gerät zu offenbaren, welches möglichst leicht zu reinigen ist, leicht zu bedienen ist und einen Milchschaum mit reproduzierbaren Eigenschaften und hoher Qualität in sehr kurzer Zeit zubereiten kann.

Mit diesem Ziel betrifft die Erfindung ein Gerät für die Aufschäumung von Milchschaum, aufweisend:
- Eine Mikrowellenkammer
- ein Behältnis zur Aufnahme der aufzuschäumenden Flüssigkeit,
- einen angetriebenen Rührer welcher die Flüssigkeit aufwirbelt,
- eine Pumpe, welche Milch in das Behältnis transportiert,
- eine Pumpe, welche Luft in das Behältnis transportiert
- einen Mikrowellengenerator,
- eine Pumpe, welche den Milchschaum aus dem Behältnis heraus pumpt und
- ggf. eine Kühlvorrichtung

Das Behältnis zur Aufnahme der aufzuschäumenden Flüssigkeit (Nahrungsmittelzubereitungsbehältnis) soll innerhalb der Mikrowellenkammer angeordnet und für den Benutzer entnehmbar sein. Dies ist möglich, da das Behältnis mittels einer Schubladen-ähnlichen Funktion aus der Kammer herausgezogen wird. Durch die Entnehmbarkeit kann das Nahrungsmittelzubereitungsbehältnis außerhalb des erfindungsgegenständlichen Gerätes gereinigt werden.

Die Milch kann in einem separaten oder dem erfindungsgemäßen Gerät angeschlossenen beziehungsweise integrierten Kühlschrank gelagert werden. Sofern die Erfindung eine eigene Kühlvorrichtung für die Milch aufweist, soll dieser die Milch bei ca. 6° Celsius kühlen.

Die verwendete Milch kann Temperaturen zwischen 4 und 25° Celsius aufweisen. Die Milchbeziehungsweise Schaumaustrittstemperatur soll zwischen 60 und 68 ° Celsius betragen. Das entsprechende Füllvolumen des gleichzeitig "on-demand" hergestellten Milchschaums soll je nach Anwenderwunsch zwischen 30-300 ml betragen.

Die Steuerung des Gerätes kann mittels mechanischer oder kapazitiver Schalter verwirklicht werden. Durch den Einsatz kapazitiver Schalter kann der Bedienungskomfort des Gerätes verbessert werden. Durch die verwendeten Schalter soll es dem Benutzer möglich sein die Menge, sowie die Konsistenz des Milchschaums zu bestimmen. Ebenfalls soll die für den entsprechenden Milchschaum gewünschte Temperatur durch den Benutzer gewählt werden können.

Zur Herstellung des Milchschaums ist ein in der Milch befindlicher Rührer erforderlich. Dieser könnte wie oder ähnlich in DE 20 2005 021 537 U1 offenbart, mittels eines DC Motors angetrieben werden. Durch die Rotation des Motors wird die Milch sowie die zugeführte Luft innerhalb des Behältnisses verwirbelt.

Der Rührer kann aus verschiedenen Elementen zusammengesetzt sein. Zum einen kann er aus torusförmigen Windungen bestehen. Alternativ kann der Rührer Flügelräder aufweisen. Die torusförmigen Windungen können ebenfalls auf einem Trägerelement befestigt sein um dem Rührer die nötige Formstabilität zu geben.

Der Rührer soll von oben oder unten in das Nahrungsmittelzubereitungsbehältnis hineinragen. Vorteilhaft bei einer oberhalb des Nahrungsmittelzubereitungsbehältnisses gewählten Anordnung ist, dass im Falle einer Undichtigkeit des Behältnisses nicht der Rührerantrieb durch etwaige Flüssigkeiten beschädigt oder zerstört werden kann. Der Rührer wird mittels eines Antriebsstrangs, welcher den Rührer mit dem befindlichen Motor in Verbindung setzt, angetrieben.

Das Gerät soll einen Milcheingang aufweisen. Der Milcheingang soll die Verbindung zwischen dem Nahrungsmittelzubereitungsbehältnis und der Milchquelle herstellen. Durch diesen Milcheingang soll aus einer nicht innerhalb des Behältnisses befindlichen Nahrungsmittelquelle die Milch in das Gerät eingebracht werden. Dies kann erfolgen mittels einer sogenannten Luftpumpe oder aber auch einer sogenannten Schlauchpumpe.

Bei einer Schlauchpumpe oder Peristaltikpumpe handelt es sich um eine Verdrängungspumpe, bei der das zu fördernde Medium durch äußere mechanische Verformung eines Schlauches durch diesen hindurch gedrückt wird. Der Schlauch stützt sich jeweils außen am Gehäuse des Pumpenkopfes ab wird von innen durch Rollen oder Gleitschuhe abgeklemmt, die sich an einem Rotor drehen bzw. über eine Nockenwelle bewegt werden. -

Vorteilhaft bei Schlauchpumpen ist die Tatsache, dass diese bei richtiger Auswahl von Baugröße, Drehzahl, Druckbereich und Schlauchmaterial für den Dauerbetrieb geeignet sind. Es handelt sich dabei um ein vollständig geschlossenes System mit glatten Flächen, welches leicht zu reinigen ist. Weitere Ventile sind nicht notwendig.

Im Rahmen der Verwendung einer Schlauchpumpe kann die Lebensmittelflüssigkeit schonend gefördert werden. Ebenfalls ist die Dosierung sehr kleiner Fördermengen möglich. Der Wartungsaufwand bei einer solchen Pumpe ist ebenfalls überschaubar. Im Vergleich zu anderen Verdrängerpumpen ist eine gleichmäßig, relativ stoßfreie Förderung der Lebensmittelflüssigkeit möglich.

Neben dem Milcheingang, soll das Gerät ebenfalls eine Lufteingang aufweisen. Dieser kann von dem Milcheingang getrennt sein. Eine Trennung ist vorteilhaft, um das Höchstmaß an Hygiene innerhalb des Gerätes zu erreichen. Die Luft kann mittels eines Kompressors in das Gerät gefördert werden.

Neben den beiden vorgenannten Eingängen, soll das Gerät auch einen Milchschaumausgang aufweisen. Durch diesen Ausgang soll der innerhalb des Gerätes hergestellte Milchschaum in das von dem Anwender gewählte Behältnis ausgegeben werden.

Innerhalb des Gerätes, vorzugsweise neben oder unterhalb des Lebensmittelzubereitungsbehältnisses, welches ebenfalls den Rührer aufweist, soll ein Mikrowellengenerator angeordnet werden.

Bei Mikrowellen handelt es sich um elektromagnetische Wellen im Frequenzbereich von 1-300 GHz. Aufgrund ihrer Wellenlänge sind Mikrowellen besonders zur Anregung von Dipol- und Multipolschwingungen von Molekülen geeignet. Die entsprechenden Moleküle versuchen sich laufend nach dem elektromagnetischen Wechselfeld auszurichten, wobei als dielektrischer Verlust Wärme entsteht. In Mikrowellenherden liegt die verwendete Frequenz bei 2,45 GHz.

Mikrowellen werden mithilfe eines Magnetrons erzeugt und mittels eines Hohlleiters in das Nahrungsmittelzubereitungsbehältnis geleitet. Bei Mikrowellen handelt sich um elektromagnetische Wellen, deswegen können sie ähnlich dem gewöhnlichen Licht reflektieren und auch gebrochen werden. So werden diese Wellen von Metallen und elektrischen Leitern reflektiert. Aus diesem Grund soll auch die Mikrowellenkammer eine derartige Innenwandung aufweisen. Durch die vorgenannte Innenwand soll ebenfalls verhindert werden, dass die Mikrowellenstrahlung aus dem erfindungsgegenständlichen Gerät unkontrolliert in die Umwelt gelangt.

Zur Versorgung des Magnetrons ist eine hohe Anodenspannung erforderlich. Diese beträgt in etwa 5 KV, welche im Gerät mithilfe eines Hochspannungstransformators und einer Spannungsverdopplerschaltung erzeugt wird. Die an der Katode anliegende Hochspannung soll dabei mit einer Frequenz von 50 Hz periodisch zwischen null und etwa fünf KV wechseln. Die Schwellenspannung des Magnetrons bewirkt, dass lediglich dann, wenn die Versorgungsspannung größer als die Schwellenspannung wird, kurze Stromimpulse auftreten. Um die Größe des Kondensators zu begrenzen, soll er so dimensioniert werden, dass er die sekundärseitige Streuinduktivität des Transformators in etwa kompensiert.

Das Magnetron soll so angeschlossen werden, dass die Anode mit dem Gehäuse der Mikrowelllenkammer verbunden ist. Dies erfolgt, damit die Sendeantenne nicht auf Hochspannungspotenzial liegt. Der Transformator versorgt ebenfalls die Glühkatode des Magnetrons mit Strom. Ein zusätzlicher Ventilator soll das Magnetron kühlen. Durch den Luftstrom wird die Verlustwärme durch die Mikrowellenkammer geblasen. Dies ist vorteilhaft um die Mikrowellenkammer trocken zu halten.

Da das Zubereitungsbehältnis nicht gleichmäßig von dem Strahlungsfeld ausgefüllt wird, können sogenannte Wobbler eingesetzt werden. Dabei handelt es sich um rotierende, metallische Flügelränder, die die Schwingungsmoden des Behältnisses ständig ändern. Diese Räder können unter einer nicht metallischen Abdeckung innerhalb des Behältnisses angeordnet werden.

Die Öffnungsklappe für die Mikrowellenkammer soll die generierten Mikrowellenstrahlen von der Außenwelt abschirmen. Ebenfalls soll diese durch ihren Verschlussmechanismus dafür sorgen, dass das Gerät bei geöffneter Klappe nicht betrieben werden kann. Sofern die Klappe ein Sichtfenster aufweisen soll, muss sich vor dieser ein Lochblech befinden. Dieses Lochblech müss Öffnungen aufweisen, die sehr viel kleiner als die Wellenlänge der Mikrowellen sind. Nur so ist die Abschirmung der Umgebung von dem elektromagnetischen Feld möglich.

Die Leistungsregulierung kann mittels Intervallbetrieb erfolgen. Dies funktioniert, in dem das Magnetron immer mit voller Leistung arbeitet, aber zum Erreichen der vom Benutzer eingestellten Leistung im Rhythmus von einigen Sekunden ein- und ausgeschaltet wird.

In einem anderen Ausführungsbeispiel kann ein Schaltnetzteil zum Einsatz kommen. Dieses ermöglicht eine beliebig einstellbare Anodenspannung. Diese kann so gewählt werden, dass von Magnetron durchgehend die gewünschte Leistung abgegeben wird.

Durch einen sogenannten Mikrowellenkanal sollen die Mikrowellen zu dem Zubereitungsbehältnis hingeführt werden.

Durch den Milchfluss in das Nahrungsmittelzubereitungsbehältnis, der Beaufschlagung der Milch mittels der Mikrowellenstrahlen und der Funktion des Rührers, wird die Milch in Bewegung versetzt. Dadurch schäumt diese unter Zuhilfenahme des Rührers auf und kann durch den Milchschaumauslass in kontrollierten Mengen ausgegeben werden.

Der Milchschaum wird im Rahmen der Verwirklichung mittels einer weiteren Pumpe aus dem Nahrungsmittelzubereitungsbehältnis heraus gepumpt. Der Anwender kann somit die gewünschte Menge Milchschaum in gewünschter Konsistenz aus dem Gerät heraus pumpen.

Zur Reinigung des Gerätes kann Wasser und/oder eine Reinigungsflüssigkeit durch das erfindungsgegenständliche Gerät gepumpt werden. Die Milchrückstände können so aus dem Gerät herausgelöst werden. Wie bereits dargelegt kann das Nahrungsmittelzubereitungsbehältnis in einem Ausführungsbeispiel auch mittels einer Schublade zur besseren Reinigung entnommen werden.

Die notwendige Sauberkeit kann somit nach jedem oder nach einer Vielzahl von Anwendungen wieder hergestellt werden.

### Bezugszeichenliste:

1) Rührerachse
2) Obere Abdeckung
3) Motor
4) Gehäuse
5) Quetschventil
6) Lufteinlass
7) Milcheinlass
8) Milchschaumausgang
9) Nahrungsmittelzubereitungsbehältnis
10) Mikrowellengenerator
11) Lüfter
12) Peristaltische Pumpe
13) Luftpumpe

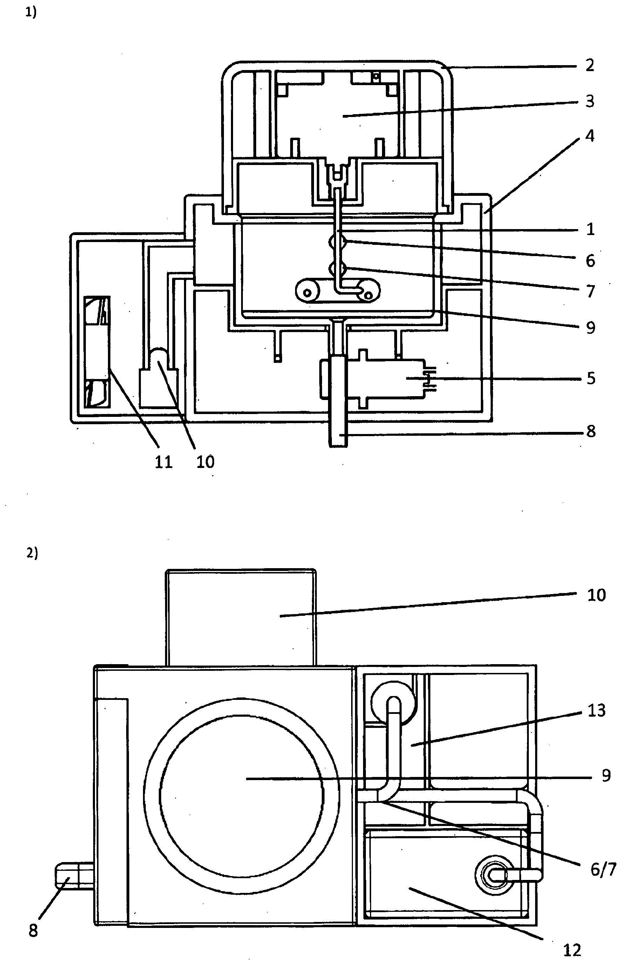

## Patentansprüche

1. Ein Gerät zur Schaumzubereitung aus einer Nahrungsmittelflüssigkeit, vorzugsweise einer milchbasierten Flüssigkeit, mit einem innerhalb eines Nahrungsmittelzubereitungsbehältnisses (9) liegenden Rührers (1), welcher von einem unter- oder oberhalb des Lebensmittelzubereitungsbehältnisses (9) liegenden Motors (3) angetrieben wird, wobei das Gerät
- eine Mikrowellenkammer aufweist, in derer sich das Nahrungsmittelzubereitungsbehältnis (9) befindet,
- jeweils ein Luft- (6) und Milcheinlassventil (7),
- jeweils eine Milch- und Milchschaum-Pumpvorrichtung,
- einen Milchschaumauslass (8) und
- einen unterhalb oder neben dem Lebensmittelbehältnis liegenden Mikrowellengenerator (10) aufweist.

2. Gerät nach Anspruch 1, **dadurch gekennzeichnet, dass** die im Gerät befindlichen Pumpen Schlauchpumpen (12) und/ oder Luftpumpen (13) sind.

3. Gerät nach Anspruch 1, **dadurch gekennzeichnet, dass** die Mikrowellenkammer eine metallische Innenwandung aufweist.

4. Gerät nach Anspruch 1, **dadurch gekennzeichnet, dass** die von dem Mikrowellengenerator (10) abgesonderte Strahlung durch einen Mikrowellenkanal in die Mikrowellenkammer eingebracht wird.

5. Gerät nach Anspruch 1, **dadurch gekennzeichnet, dass** die Mikrowellenkammer einen strahlungsundurchlässigen Öffnungsmechanismus, vorzugsweise einen Deckel (2), auf der Oberseite des Gerätes oder der seitlichen Geräteaußenseite aufweist.

6. Gerät nach Anspruch 5, **dadurch gekennzeichnet, dass** der Öffnungsmechanismus der Mikrowellenkammer ein Sichtfenster aufweist, welches mittels eines Lochbleches die elektromagnetische Strahlung abschirmt.

7. Gerät nach Anspruch 1, **dadurch gekennzeichnet, dass** das Nahrungsmittelzubereitungsbehältnis (9) mittels einer horizontal angebrachten Schienenführung entnehmbar ist.

8. Gerät nach Anspruch 1, **dadurch gekennzeichnet, dass** das Gerät eine eigene Kühlvorrichtung aufweist.

9. Gerät nach Anspruch 8, **dadurch gekennzeichnet, dass** die Kühlvorrichtung eine Wahltemperatur zwischen vier und 25 °C liefert.

10. Gerät nach Anspruch 1, **dadurch gekennzeichnet, dass** das Gerät ohne Erwärmungsfunktion den Zubereitungsprozess vollzieht und kalten Milchschaum ausgibt.

11. Gerät nach Anspruch 1, **dadurch gekennzeichnet, dass** die Schaumaustrittstemperatur zwischen 60 und 68 °C beträgt.

12. Gerät nach Anspruch 1, **dadurch gekennzeichnet, dass** das Gerät mechanische und/oder kapazitive Schalter aufweist, welche die Menge sowie die Konsistenz des zu erstellenden Milchschaums regulieren.

13. Gerät nach Anspruch 1, **dadurch gekennzeichnet, dass** die von dem Mikrowellengenerator (10) generierte Frequenz zwischen 2,40 GHz und 2,60 GHz liegt.

## Claims

1. A device for frothing a liquid foodstuff, preferably a milk-based liquid, with an agitator (1) located inside a foodstuff delivery container (9), which is driven by a motor (3) located above the foodstuff delivery container (9), wherein the device comprises
- a microwave chamber, in which the foodstuff delivery container (9) is located,
- in each case an air inlet valve (6) and a milk inlet valve (7),
- in each case a milk and milk froth pump device,
- a milk foam outlet (8) and
- a microwave generator (10) located beneath or next to the foodstuff delivery container.

2. Device according to claim 1, **characterised in that** the pumps located in the device are hose pumps (12) and/or air pumps (13).

3. Device according to claim 1, **characterised in that** the microwave chamber comprises a metallic inner wall.

4. Device according to claim 1, **characterised in that** the radiation emitted by the microwave generator (10) is introduced through a microwave channel into the microwave chamber.

5. Device according to claim 1, **characterised in that** the microwave chamber comprises a opening mechanism which is impermeable to radiation, preferably a cover (2), on the upper side of the device or on the lateral outer side.

6. Device according to claim 5, **characterised in that** the opening mechanism of the microwave chamber exhibits a viewing window, which is screened from the electromagnetic radiation by means of a hole plate.

7. Device according to claim 1, **characterised in that** the foodstuff delivery container (9) can be removed by means of a horizontally arranged rail guide element.

8. Device according to claim 1, **characterised in that** the device comprises its own cooling device.

9. Device according to claim 8, **characterised in that** the cooling device provides a temperature which can be selected from between four and 25 °C.

10. Device according to claim 1, **characterised in that** the device completes the delivery process without a warming function, and emits cold milk froth.

11. Device according to claim 1, **characterised in that** the froth emergence temperature is between 60 and 68 °C.

12. Device according to claim 1, **characterised in that** the device comprises mechanical and/or capacitive switches, which regulate the quantity and the consistency of the milk froth which is to be provided.

13. Device according to claim 1, **characterised in that** the frequency generated by the microwave generator (10) lies between 2.40 GHz and 2.60 GHz.

## Revendications

1. Appareil de préparation de mousse à partir d'un liquide alimentaire, de préférence un liquide à base de lait, comportant un mélangeur (1) situé à l'intérieur d'un contenant (9) de préparation alimentaire, lequel est entraîné par un moteur (3) situé sur ou sous le contenant (9) de préparation alimentaire, l'appareil
- présentant un sas à micro-ondes, dans lequel se trouve le contenant (9) de préparation alimentaire,
- présentant respectivement une soupape d'air (6) et une soupape d'admission de lait (7),
- respectivement un dispositif de pompage de lait et un dispositif de pompage de mousse de lait,
- une sortie de mousse de lait (8) et
- un générateur de micro-ondes (10) situé sous ou à côté du contenant de préparation alimentaire.

2. Appareil selon la revendication 1, **caractérisé en ce que** les pompes situées dans l'appareil sont des pompes à flexibles (12) et/ou des pompes à air (13).

3. Appareil selon la revendication 1, **caractérisé en ce que** le sas à micro-ondes présente une paroi intérieure métallique.

4. Appareil selon la revendication 1, **caractérisé en ce que** le rayonnement émis par le générateur de micro-ondes est introduit dans le sas à micro-ondes par un canal de micro-ondes.

5. Appareil selon la revendication 1, **caractérisé en ce que** le sas à micro-ondes présente un mécanisme d'ouverture qui ne laisse pas passer les ondes, de préférence un couvercle sur la face supérieure de l'appareil ou sur la face latérale extérieure de l'appareil.

6. Appareil selon la revendication 5, **caractérisé en ce que** le mécanisme d'ouverture du sas à micro-ondes présente une fenêtre d'inspection laquelle protège contre les ondes électromagnétiques au moyen d'une tôle perforée.

7. Appareil selon la revendication 1, **caractérisé en ce que** le contenant (9) de préparation alimentaire peut être retiré grâce à un guidage à glissière placé à l'horizontale.

8. Appareil selon la revendication 1, **caractérisé en ce que** l'appareil présente un propre dispositif de refroidissement.

9. Appareil selon la revendication 8, **caractérisé en ce que** le dispositif de refroidissement propose une sélection de température comprise entre quatre et 25 °C.

10. Appareil selon la revendication 1, **caractérisé en ce que** l'appareil effectue le processus de préparation sans fonction de réchauffage et délivre une mousse de lait froide.

11. Appareil selon la revendication 1, **caractérisé en ce que** la température de la mousse en sortie est située entre 60 et 68 °C.

12. Appareil selon la revendication 1, **caractérisé en ce que** l'appareil présente des sélecteurs mécaniques et/ou capacitifs qui régulent la quantité et la consistance de la mousse de lait à réaliser.

13. Appareil selon la revendication 1, **caractérisé en ce que** la fréquence générée par le générateur de micro-ondes est située entre 2,40 GHz et 2,60 GHz.
